# EUROPEAN PATENT APPLICATION

(11) **EP 4 832 285 A1**
(43) Date of publication of application: **28.10.2026**
(21) Application number: 25171640.3
(22) Date of filing: 22.04.2025
(51) Int. Cl.: H02H 7/26, H02H 3/28

(54) **METHOD AND SYSTEM FOR DIFFERENTIAL PROTECTION**

(71) Applicant: Hitachi Energy Ltd, 8050 Zürich (CH)
(72) Inventor: Wang, Jianping, 724 60 Västerås (SE); Tajdinian, Mohsen, 723 46 Västerås (SE); Li, YouYi, 722 19 Västerås (SE); Gore, Rahul, Stockholm (SE)
(74) Representative: AWA Sweden AB

(57) **Abstract**

The present disclosure relates to a method of differential protection of a power line (PL) electrically connected between a first substation (10A) and a second substation (10B) of an electrical power network (EPN), the method implemented by at least a first protective relay arranged at the first substation (10A), the method comprising: receiving (S1) a first current phasor (*I*_{1*A*}) based at least on a first current measurement of a first current in the power line (PL) at the first substation (10A) and a second current phasor (*I*_{2*A*}) from the second substation (10B) based at least on a second current measurement of a second current in the power line (PL) at the second substation (10B); determining (S2) a differential current (*Diff_I*_{*A*12}) based at least on a difference between the first current phasor (*I*_{1*A*}) and the second current phasor (*I*_{2*A*}); determining (S3) a restraint current (*Restraint_I*_{*A*12}) based at least on the first current phasor (*I*_{1*A*}) and the second current phasor (*I*_{2*A*}); determining (S4) whether at least one internal fault condition is satisfied, the at least one internal fault condition comprising an internal fault condition indicative of whether the differential current (*Diff_{_}I*_{*A*12}) exceeds the restraint current (*Restraint_I*_{*A*12}), if the at least one internal fault condition is satisfied, generating (S5) a first tripping signal to a first circuit breaker (CB_{A}) to disconnect the power line (PL) from the first substation. A differential protection system and an electrical power network is also disclosed.

## Description

### Technical Field

The present disclosure relates to a method and system for differential protection, and an electrical power network comprising said system.

### Background

In power grids, substations are key nodes that connect generation, transmission, and distribution systems while enabling system protection. Differential protection is a widely used approach for fault detection in power lines connecting substations. In this approach, the current is measured at both ends of a line using current transformers (CTs). A pair of differential protection relays at respective substations receive these sample measurements - one locally and the other via a communication channel - and calculate the difference to detect abnormal conditions, such as short circuits or ground faults. Upon fault detection, the relays can isolate the affected section to maintain grid stability.

To ensure reliable operation, it is useful to distinguish between internal faults, which occur within a protected zone bounded by circuit breakers, and external faults, which may cause large through-currents. Polarization techniques can help improve fault discrimination by providing a stabilizing reference signal. However, implementing these techniques typically requires strict time synchronization between local and remote sample measurements to ensure accurate comparisons.

If the sample measurements are not precisely aligned in time, phase and magnitude. comparisons may become inaccurate, leading to false trips or missed fault detections. Existing solutions rely on time synchronization methods, such as GPS or ping-pong techniques, but these methods are vulnerable to communication asymmetries and delay variations. Even small synchronization errors can degrade protection performance, compromising the ability to correctly distinguish internal faults from external ones. Examples of such differential protection systems include the RED670/650, which rely on either GPS or echo-based synchronization.

Accordingly, there is a need for improved differential protection that mitigates synchronization issues between local and remote measurements.

### Summary

It is an object of the present disclosure to provide an improved solution that alleviates at least some drawbacks with present solutions or improves over present solutions in at least one aspect or provides an alternative over present solutions in at least one aspect. This and/or at least one other object, which will be implicitly or explicitly detailed in the following disclosure, is solved by one or more of the inventions defined in the claims. Additional advantageous embodiments are described in the following.

The present disclosure is based on the inventors' realization that time synchronization demands in differential protection methods may be relaxed by implementing a phasor-based differential protection method rather than a sample-based differential protection. Phasors are generally calculated by using a Fast Fourier Transform (FFT) to convert the time-domain current waveform into the frequency domain. Thus, by communicating phasors rather than sample values, small communication delays or time synchronization mismatches between the protection relays have a less impact on phase angle or magnitude, especially compared to sample-based measurements. Thus, a protection relay configured to receive both local and remote current phasors may implement a phasor-based differential protection method less sensitive to time synchronization issues.

It should be understood that the differential protection method disclosed herein may be applied to various types of power lines. A power line typically comprises one or more conductors for transmitting electrical power between substations or other points in the grid. In a three-phase system, a power line may include three conductors, each carrying a respective phase of alternating current (AC), typically referred to as Phase A, Phase B, and Phase C. The differential protection method described herein can be applied to monitor and compare the currents in each phase across these conductors, allowing for accurate fault detection and system protection regardless of the specific configuration of the power line.

It should be understood that the method of differential protection disclosed herein is used for providing differential protection to a protected zone. The protected zone is bounded by circuit breakers which may upon activation isolate the protected zone. Although the following is described in the context of differential protection of a power line between two substations, the method of differential protection may be applicable to any component electrically connected between two circuit breakers.

According to a first aspect of the present disclosure, a method of differential protection of a power line is provided. The power line is electrically connected between a first substation and a second substation of an electrical power network. The method is implemented by at least a first protective relay arranged at the first substation. By considering phase A as an example, the method comprises receiving a first current phasor *I*_{1*A*} based at least on a first current measurement of a first current in the power line at the first substation and a second current phasor *I*_{2*A*} from the second substation based at least on a second current measurement of a second current in the power line at the second substation. The method comprises determining a differential current *Diff_I*_{*A*12} based at least on a difference between the first current phasor *I*_{1*A*} and the second current phasor *I*₂*_{A}.* The method comprises determining a restraint current *Restraint _I*_{*A*12} based at least on the first current phasor *I*_{1*A*} and the second current phasor *I*₂*_{A}.* The method comprises determining whether at least one internal fault condition is satisfied, the at least one internal fault condition comprising an internal fault condition indicative of whether the differential current *Diff_I_{A12}* exceeds the restraint current *Restraint _I*_{*A*12}*.* The method comprises, if the at least one internal fault condition is satisfied, generating a first tripping signal to a first circuit breaker to disconnect the power line from the first substation.

As the method utilizes phasors for differential protection, time synchronization constraints are advantageously relaxed. Thus, the method may advantageously be used for differential protection of Medium Voltage (MV) power lines for which it is uncommon to implement high performance communication links that promote low time synchronization errors. The method may in particular cooperate well when a communication link between protective relays is provided by a non-dedicated communication network such as an ethernet-based communication network or a cloud-based communication network which otherwise are associated with significant time synchronization issues.

Moreover, by also taking into account a differential current and a restraint current, the method may also advantageously make it possible to distinguish between internal faults and external faults. In particular, the restraint current may represent a reference current entering and leaving a protected zone and provides a threshold to differentiate between internal faults and external faults or inrush currents. If the differential current exceeds a certain proportion of the restraint current, the protective relay generates the tripping signal to at least the first circuit breaker (optionally to any circuit breakers required to be activated to isolate the protected zone); otherwise, it avoids generating the tripping signal, i.e., the protective relay restrains the tripping, to avoid unnecessary activation. The restraint current may facilitate a protective relay to only respond to internal faults.

To determine a current phasor for a given power line, the corresponding current is first measured, e.g., by using a current transformer (CT). The CT generates a secondary current proportional to the primary current in the power line. The current waveform is then sampled locally at a sufficiently high sampling frequency, typically in the range between 1 kHz to 4 kHz sampling frequency. This ensures the accuracy of the measurements, particularly in systems with higher frequencies or fast transients.

The sampled current data may then be processed using a Fast Fourier Transform (FFT) to convert the time-domain current waveform into the frequency domain. The FFT identifies the amplitude and phase of each frequency component of the current, allowing for the extraction of the fundamental frequency component (e.g., 50 or 60 Hz in most power systems).

From the FFT results, the magnitude of the fundamental frequency component may be calculated as the Root Mean Square (RMS) value, which provides the current's effective value. The phase angle of the fundamental frequency component is also extracted from the FFT result, indicating the phase shift relative to a reference signal (such as a voltage reference obtained via a voltage transformer, VT).

The current phasor may then be represented as a complex number as: ${I}_{1 A} = {I}_{1 A , rms} ∠ {θ}_{1 A}$ wherein
*I*_{1*A,rms*} is the RMS magnitude of the current, and
*θ*_{1A} is the phase angle of the current relative to the reference.

A local current phasor may be determined by a protective relay based on local current measurements. Alternatively, local current phasor may be determined by a phasor measurement unit, PMU, which may be separate from or integrated with the local protective relay. Current measurements obtained via the CT may be fed into the PMU, which then calculates the phasor representation of the current. In this way, CTs may be used to measure the current, and PMUs may be used to convert this current measurement into a current phasor.

According to one embodiment, the at least one internal fault condition comprises an internal fault condition indicative of whether there is a time discrepancy between a first timing of the first current phasor and a second timing of the second current phasor exceeding a predetermined time period.

The predetermined time period may be based on at least one of, or a combination of, a maximum time synchronization error and a maximum communication latency for communication between the first protective relay and the second protective relay.

Maximum Time Synchronization Error may refer to an allowable difference in time between the protective relays at each end of the protected zone. That is, a first protective relay may operate according to a first clock reference and a second protective relay may operate according to a second clock reference. The difference in time between the protective relays may thus be the time difference between the clocks of the respective protective relays.

Maximum Communication Latency may refer to a time delay in transmitting current phasors between the protective relay, e.g., via a communication link. High latency can cause delays in fault detection and impact the protection system's response time.

By implementing the predetermined time period, fault detection accuracy may advantageously be improved by ensuring the current measurements are time-aligned, reducing the risk of false trips or missed faults.

Protective relays according to the present disclosure may implement the predetermined time period via a timer configured to keeping track of a holding time *T_{hold_time}* indicative of difference in timings of the first current phasor and the second current phasor. When the holding time *T_{hold_time}* is larger than the predetermined time period, optionally by a predetermined safety margin, the corresponding internal fault condition may be determined to be satisfied. Thereby, the number of false trips may be advantageously reduced as any deviation must be sustained for at least the predetermined time period.

According to one embodiment, the differential current *Diff_I*_{*A*12} is determined as the absolute value of a difference between an absolute value of the first current phasor *I*_{1*A*} and an absolute value of the second current phasor *I*_{2*A*} $Diff _ {I}_{A 12} = \left|\left|{I}_{1 A}\right|-\left|{I}_{2 A}\right|\right|$

Alternatively, the differential current *Diff_I*_{*A*12} may be determined as the difference between the first current phasor *I*_{1*A*} and the second current phasor *I*_{2*A*} $Diff _ {I}_{A 12} = {I}_{1 A} - {I}_{2 A}$

However, the former alternative may advantageously avoid complications related to phase angle differences between the two current measurements. Phase angles can be sensitive to small time synchronization errors or phase shifts caused by communication latency, which may lead to inaccuracies or false fault detection. By using the absolute value of the current phasors, the focus is instead on the magnitude of the currents, which may advantageously reduce an impact of phase misalignments and improving stability in environments with imperfect synchronization.

According to one embodiment, the restraint current is determined as the maximum of an absolute value of the first current phasor *I*_{1*A*} and an absolute value of the second current phasor *I*_{2*A*} multiplied by a scaling factor *Kᵣ* and optionally adjusted by a constant $Restraint _ {I}_{A 12} = {K}_{r} \times Maximum \left\{\left|{I}_{1 A}\right|, \left|{I}_{2 A}\right|\right\} + C$

By determining the restraint current in this way, it can be more effective in situations where the current at one end is significantly larger than at the other end. That is, the restraint current is more sensitive to a magnitude of any individual current. *Kᵣ* may correspond to a ramp coefficient. According to a non-limiting example, *Kᵣ* is equal to or less than 0.8 to facilitate accuracy of internal fault detection. Depending on application, *Kᵣ* may be selected within an interval of 0.3-0.8. According to a non-limiting example, the constant C corresponds to a p.u. value. For example, C may be selected within an interval of 0.05-0.15. The constant C may be adjusted depending on application.

Alternatively, the restraint current *Restraint_I*_{*A*12} may be determined as an average of the absolute values of the first current phasor *I*_{1*A*} and the second current phasor *I*_{2*A*} multiplied by a scaling factor *Kᵣ* and optionally adjusted by a constant $Restraint _ {I}_{A 12} = {K}_{r} \times \frac{\left|{I}_{1 A}\right| + \left|{I}_{2 A}\right|}{2} + C$

By determining the restraint current in this way, it may provide a more balanced reference, which can help avoid unnecessary tripping.

According to one embodiment, the method further comprises: determining a first incremental current *ΔI*_{1A} based at least on a first plurality of values of the first current phasor *I*₁*_{A};* determining a second incremental current *ΔI_{2A}* based at least on a second plurality of values of the second current phasor I*_{2A}*, determining a first polarity of the first incremental current *ΔI*_{1*A*} and a second polarity of the second incremental current *ΔI*_{2A} ; wherein the at least one internal fault condition comprises an internal fault condition indicative of whether the first polarity and the second polarity are the same.

By taking into account incremental currents, the method of differential protection may be more robust during situations of CT saturation during external faults. CT saturation during external faults may refer to a condition where a CT for measuring currents in the power line is exposed to a large fault current, typically occurring outside the protected zone (external fault), and the magnetic core of the CT becomes saturated. When this happens, the CT is no longer able to accurately measure the current flowing through the power line, which can lead to incorrect or distorted current measurements. The security in advantageously enhanced by the aforementioned incremental currents, which, depending on how they are defined, may have the same polarity for internal faults and different polarities for external faults. In this way, the method may be capable of distinguishing internal faults from external faults even during situations of CT saturation, thereby further avoiding unnecessary tripping.

According to one embodiment, the first incremental current *ΔI*_{1*A*} and/or the second incremental current *ΔI*_{2A} are/is determined as $\left\{\begin{matrix}Δ {I}_{1 A} = {i}_{a 1} \left(t\right) - 2 {i}_{a 1} \left(t-2T\right) + {i}_{a 1} \left(t-T\right) \\ Δ {I}_{2 A} = {i}_{a 2} \left(t\right) - 2 {i}_{a 2} \left(t-2T\right) + {i}_{a 2} \left(t-T\right)\end{matrix}\right.$ wherein *i*ₐ₁(*t*) is an instantaneous value of the first current phasor at time t, iₐ₂(t) is an instantaneous value of the second current phasor at time *t,* and *T* is a fundamental period of the first current phasor *I*_{1*A*} and the second current phasor *I_{2A}.*

As the respective instantaneous values of the current phasors are separated in time by a multiple of the fundamental time period, they are ideally equal during situations of no fault, thus resulting in that the components of each incremental current cancel out. However, during fault situations, in which the magnitude and/or phase may change on time scales shorter than a fundamental period, two or more of the components may become different, thus resulting in a non-zero incremental current.

Any one of the first incremental current and the second incremental current may be determined more generally as $Δ I = i \left(t\right) + {\sum }_{k = 1}^{N} {δ}_{k} \times {α}_{k} \times i \left(t-{β}_{k}T\right)$ wherein *δₖ* = ±1, *αₖ* is a positive integer indicating the weight the *k*:th historic current phasor value should be given, and *βₖ* is a positive integer indicating the age of the k:th historic current phasor value in terms of fundamental periods, and *N* indicates the total number of historic current phasors to consider. It can be seen that the aforementioned incremental currents are obtained by *N =* 2, *δ*₁ = -1, *δ*₂ = 1, *α*₁ = 2, *α*₂ = 1, *β*₁ = 2, and *β*₂ = 1. It should be understood that *N* and the other parameters may be selected to result in an incremental current of varying complexity.

By defining the incremental currents using at least two historic phasor values (i.e., *N* ≥ 2), it may promote both sensitivity and security in detecting the changes of disturbance within an electrical power network disturbance, which may advantageously improve better performance in case of harmonics, frequency shifts as well as power swings comparing with a simple one cycle calculation method (i.e., *N* = 1).

According to one embodiment, the at least one internal fault condition comprises an internal fault condition indicative of whether an absolute value of the first incremental current *ΔI*_{1*A*} or an absolute value of the second incremental current *ΔI_{2A}* exceeds a predetermined incremental current threshold. By this, the method may advantageously be more capable of distinguishing between internal faults and external faults. The predetermined incremental current threshold may be defined in terms of a base unit, i.e., the predetermined incremental current threshold may be given in p.u. As a non-limiting example, the predetermined incremental current threshold may be 0.5 p.u.

According to one embodiment, the at least one internal fault condition comprises an internal fault condition indicative of whether a first current amplitude *I*_{1*Am*} of the first current phasor *I*_{1*A*} or a second current amplitude *I*_{2*Am*} of the second current phasor *I*_{2*A*} exceeds a predetermined current amplitude threshold. By this, the method may advantageously be more capable of distinguishing between internal faults and external faults. The predetermined current amplitude threshold may be defined in terms of a base unit, i.e., the predetermined current amplitude threshold may be given in p.u. As a non-limiting example, the predetermined current amplitude threshold may be 0.5 p.u.

According to one embodiment, the method is implemented by the first protective relay and a second protective relay, wherein the first tripping signal is generated by the first protective relay to activate the first circuit breaker and a second tripping signal is generated by the second protective relay to activate a second circuit breaker for disconnecting the power line from the second substation.

According to one embodiment, the first tripping signal and the second tripping signal are only generated when the first protective relay and the second protective relay have exchanged information indicating that at least one of the first protective relay and the second protective relay has determined that the at least one internal fault condition is satisfied. In this way, the protective relays may reach consensus whether there is an internal fault, and then generate the respective tripping signals to activate the respective circuit breakers.

According to one embodiment, a communication link between the first substation and the second substation is established via a non-dedicated communication network or an optical fiber cable. A communication link may be established between protective relays of an electrical power network to enable real-time data exchange for fault detection, isolation, and power network protection. The communication link may be implemented via fiber optics, or wireless communication, facilitating coordination of relay operations. The protective relays may exchange a local current phasor with one another, so that each protective relay obtains a local current phasor and a remote current phasor.

According to one embodiment, the method is applied for each phase of currents in the power line comprising A, B, C three phase conductors. The method may be applied individually to each phase current in the power line to detect and isolate faults occurring in one or more phases.

According to a second aspect of the present disclosure, a differential protective system of differential protection of a power line is provided. The power line is electrically connected between a first substation of an electrical power network and a second substation, the differential protective system configured to be arranged at the first substation and be communicatively connected to at least a first circuit breaker for disconnecting the power line from the first substation, the protective system comprising: at least one protective relay configured to perform the method according to the first aspect or any embodiment thereof. An electrical power network may be a system in which at least a first device is electrically connected to at least a second device for transfer and/or distribution and/or utilization of electrical energy. An electrical power network may be an electrical power system. An electrical power network may be configured to utilize HV and/or MV and/or LV.

The protective system may be configured to communicate with a corresponding protective system at a second substation via a communication link to exchange current phasor measurements.

The protective system may be configured to measure and compare phase currents for each phase of the power line to detect differential current indicative of an internal fault condition or an external fault condition.

The protective system may be operatively connected to a circuit breaker and configured to generate a tripping signal when the differential current exceeds a predefined threshold. The tripping signal may be generated by a protective relay of the protective system.

The protective system may comprise a current transformer (CT), such as the CT described in the context of the first aspect of the disclosure. The protective system may comprise a phasor measurement unit (PMU), such as the PMU described in the context of the first aspect of the disclosure. The protective system may comprise a communication interface configured to be communicatively connected to the protective relay and allow communication between the protective relay and the communication link.

According to a third aspect of the present disclosure, an electrical power network is provided. The electrical power network comprises: a first substation comprising a first circuit breaker; a power line configured to be electrically connected between the first substation and a second substation, and the differential protective system according to the second aspect or any embodiment thereof, wherein a first protective relay of the at least one protective relay is arranged at the first substation.

According to one embodiment, the electrical power network comprises the second substation, wherein a second protective relay of the at least one protective relay is arranged at the second substation. The second protective relay may be comprised in a second protective system configured to be arranged at the second substation. The second protective system may be configured as the first protective system.

According to one embodiment, the power line is a medium voltage, MV, power line, a low voltage, LV, power line, or a high voltage, HV, power line.

HV typically refers to voltages that exceed those used for residential and/or commercial applications, with specific thresholds depending on the region. For example, the International Electrotechnical Commission (IEC) generally considers alternating current (AC) voltages of 1000 V or more, and direct current (DC) voltages of 1500 V or more, to be classified as high voltage. More specifically, HV may refer to electrical voltage levels equal to or greater than 35 kV and up to several hundred kilovolts. HV may however refer to electrical voltage levels equal to or greater than 115 kV.

MV typically refers to electrical voltage levels that are higher than LV, but lower than HV. MV typically includes voltages equal to or greater than 1 kV but less than 35 kV. These voltage levels are commonly used for power distribution within urban or industrial settings and for the transmission of power to transformers that supply end-user loads. MV may however refer to electrical voltage levels equal to or greater than 10 kV but less than 66 kV (and HV being equal to or greater than 66 kV).

LV typically refers to electrical voltage levels that are used for residential, commercial, and light industrial applications. LV typically includes voltages less than 1 kV, with the most common being 230 V for residential use and 400 V for commercial and industrial applications. LV power lines may be used to distribute electrical power directly to end users, such as homes, businesses, and small industries. However, LV may refer to 1000V or less (in which case MV is at least greater than 1000V but less than 35 kV or 66 kV).

It should be understood that any one power line connected between the first substation and the second substation may be any one of a HV, MV, or LV power line.

In particular, the method of differential protection of the present disclosure is advantageous for differential protection of a MV power line.

According to a fourth aspect, a computer program is provided. The computer program comprises instructions which, when the program is executed by a computer, cause the computer to carry out the method according to the first aspect or any embodiments thereof.

According to a fifth aspect, a computer-readable storage medium is provided. The computer-readable storage medium comprises instructions which, when executed by a computer, cause the computer to carry out the method according to the first aspect or any embodiments thereof.

Effects and features of the second and third and fourth and fifth aspects are largely analogous to those described above in connection with the first aspect. Embodiments mentioned in relation to the first aspect are largely compatible with the second and third and fourth and fifth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of the Drawings

The invention will in the following be described in more detail with reference to the enclosed drawings, wherein:
Fig. 1 schematically illustrates a portion of an electrical power network comprising a power line comprising A, B, C phase conductors, and at least a first substation electrically connected to a second substation, and protective relays arranged at the respective substation implementing a method of differential protection according to some embodiments;
Fig. 2 schematically illustrates a flow chart of a method of differential protection according to some embodiments, and
Figs. 3-6 illustrate graphs of various currents of the method of differential protection according to some embodiments.

### Description of Embodiments

Hereinafter, the principle of the present disclosure will be described with reference to illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification.

The disclosed subject matter will now be described with reference to the attached drawings. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

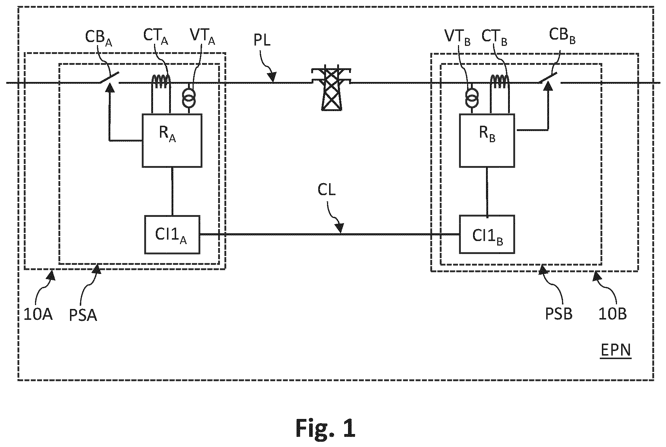

Fig. 1 schematically illustrates a portion of an electrical power network EPN comprising a power line PL comprising A, B, C three phase conductors, and at least a first substation 10A electrically connected to a second substation 10B, and protective relays R_{A}, R_{B} arranged at the respective substation 10A, 10B implementing a method of differential protection according to some embodiments. According to a non-limiting example, the power line is a medium voltage, MV, power line.

The first protective relay R_{A} is comprised in a first protective system PSA. The first protective system PSA may comprise a first current transformer, CT_{A}, for providing a first current measurement of a first current in the power line PL at the first substation 10A. Likewise, the second protective relay R_{B} may be comprised in a second protective system PSB. The second protective system PSB may comprise a second current transformer (CT_{B}) for providing a second current measurement of a second current in the power line PL at the second substation 10B.

The first protective relay R_{A} may receive a first current phasor *I*_{1*A*} based at least on the first current measurement of the first current in the power line PL at the first substation 10A and a second current phasor *I*_{2*A*} from the second substation 10B based at least on the second current measurement of the second current in the power line PL at the second substation 10B. The first current phasor may be determined by the first protection system PSA, e.g., via a first phasor measurement unit, PMU, based on the aforementioned first current measured and a first voltage obtained via a first voltage transformer VT_{A}, wherein the phase of the first current phasor is the phase between the first current and the measured second voltage. The second current phasor may be determined by the second protection system PSB, e.g., via a second phasor measurement unit, PMU, based on the aforementioned first current measured and a second voltage obtained via a second voltage transformer VT_{B}, wherein the phase of the second current phasor is the phase between the second current and the measured second voltage.

The first protective relay R_{A} may receive the second current phasor *I*_{2*A*} via a communication link CL, which may be an optical fiber cable or a non-dedicated communication network (such as ethernet-based communication network or a cloud-based communication network). The first protective relay R_{A} may be communicatively connected to the communication link via a first communication interface CI1_{A}. The second protective relay R_{B} may be communicatively connected to the communication link via a second communication interface CI1_{B}.

The first protective relay R_{A} may be communicatively connected to a first circuit breaker CB_{A}. The second protective relay R_{B} may be communicatively connected to a second circuit breaker CB_{B}. The first protective relay R_{A} and the second protective relay R_{B} may cooperate to provide a phasor-based differential protection of the power line PL.

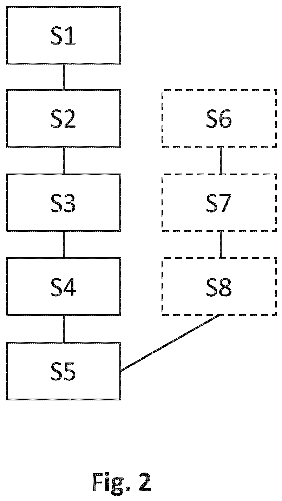

Fig. 2 illustrates a flow chart of a method of differential protection according to some embodiments. It should be understood that the method may be applied for each phase of current in the power line. That is, the method may be applied for each phase of the power line, which may comprise three phase conductors for conducting currents of phase A, phase B, and phase C. In the following, the method is described in the context of Phase A by way of example.

The method is implemented by at least the first protective relay, and may be implemented by the first protective relay and the second protective relay. The method comprises receiving S1 a first current phasor *I*_{1*A*} based at least on a first current measurement of a first current in the power line PL at the first substation 10A and a second current phasor *I*_{2*A*} from the second substation 10B based at least on a second current measurement of a second current in the power line PL at the second substation 10B. The method comprises determining S2 a differential current *Diff_I*_{*A*12} based at least on a difference between the first current phasor *I*_{1*A*} and the second current phasor *I*₂ₐ. The method comprises determining S3 a restraint current *Restraint_I*_{*A*12} based at least on the first current phasor *I*_{1*A*} and the second current phasor *I*_{2A}. The method comprises determining S4 whether at least one internal fault condition is satisfied, the at least one internal fault condition comprising an internal fault condition indicative of whether the differential current *Diff_I*_{*A*12} exceeds the restraint current *Restraint_I*_{*A*12}*.* The method comprises, if the at least one internal fault condition is satisfied, generating S5 a first tripping signal to a first circuit breaker CB₁ to disconnect the power line PL from the first substation 10A.

Power lines within MV power grids are normally shorter than 60km and a capacitive leakage current can be neglected if the power line is overhead power line. In general, the method of differential protection herein described is phase segregated in which each phase has its own differential fault detection loops by using corresponding phase current inputs so that faults in each phase will be detected separately and corresponding circuit breakers in each phase are tripped finally. In Fig. 1, only a single power line comprising three phase conductors is shown but there may be multiple power lines between two substations.

For simplicity, phase A is considered as an example for the method of differential protection. The method may equally manage differential protection for other phases, such as phase B and C.

For external faults in phase A, two side currents (e.g. the currents at the respective substations 10A, 10B) will in theory have the same amplitude if current transformer, CT, saturation conditions are excluded. If we consider phase A currents in each side with amplitude value as *I*_{1Am} at the local side (i.e., at the first substation 10A), and *I_{2Am}* at the remote side (e.g., at the second substation 10B), the following condition is given for external fault conditions in phase A. ${I}_{1 Am} = {I}_{2 Am}$

For internal faults, the two side currents have different amplitudes. ${I}_{1 Am} \neq {I}_{2 Am}$

That is, an internal fault condition may be based on the above observation if one of the measured currents is higher than a threshold setting, such as 1.5 p.u. ${I}_{1 Am} > 1.5 p . u .$ or ${I}_{2 Am} > 1.5 p . u$

Moreover, the differential current *Diff_I*_{*A*12} may be determined as the absolute value of a difference between an absolute value of the first current phasor *I*_{1*A*} and an absolute value of the second current phasor *I*_{2*A*} $Diff _ {I}_{A 12} = \left|\left|{I}_{1 A}\right|-\left|{I}_{2 A}\right|\right|$

The restraint current may be determined as the maximum of an absolute value of the first current phasor *I*_{1*A*} and an absolute value of the second current phasor *I*_{2*A*} multiplied by a scaling factor *Kᵣ* and optionally adjusted by a constant $Restraint _ {I}_{A 12} = {K}_{r} \times Maximum \left\{\left|{I}_{1 A}\right|, \left|{I}_{2 A}\right|\right\} + C$

The method may also implement a timer for monitoring a holding time T*_{hold_time}* indicative of a whether a time discrepancy between a first timing of the first current phasor and a second timing of the second current phasor exceeds a predetermined time period. The predetermined time period may account for Maximum Synchronization Error Time, Communication Latency, and/or a safety of margin. ${T}_{hold _ time} > {T}_{predetermined _ th}$

If excluding CT saturation conditions, a plurality of internal fault conditions may be formalized as follows. $\left\{\begin{matrix}if Diff _ {I}_{A 12} > {Restraint}_{{I}_{A 12}} and \\ {I}_{1 Am} > 1.5 p . u or {I}_{2 Am} > 1.5 p . u and \\ {T}_{hold _ time} > {T}_{predetermined _ th}\end{matrix}\right.$

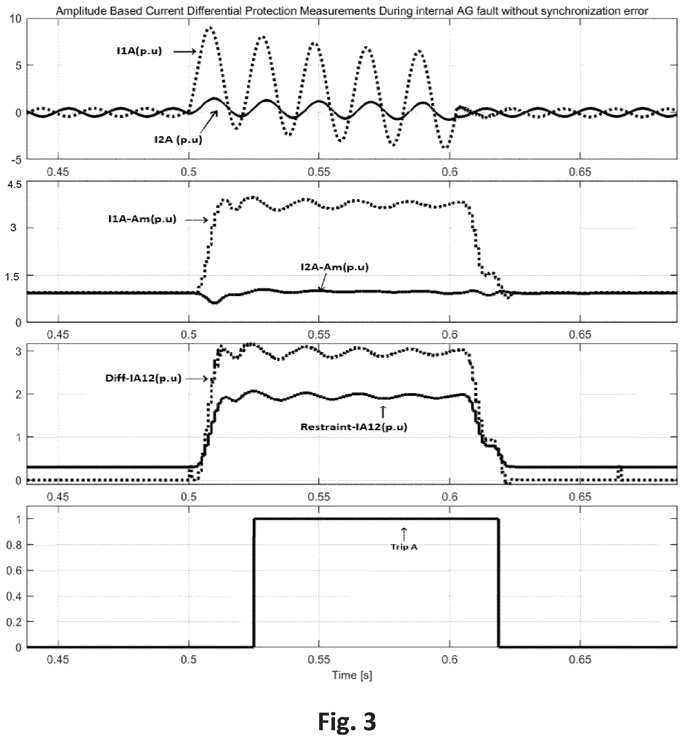

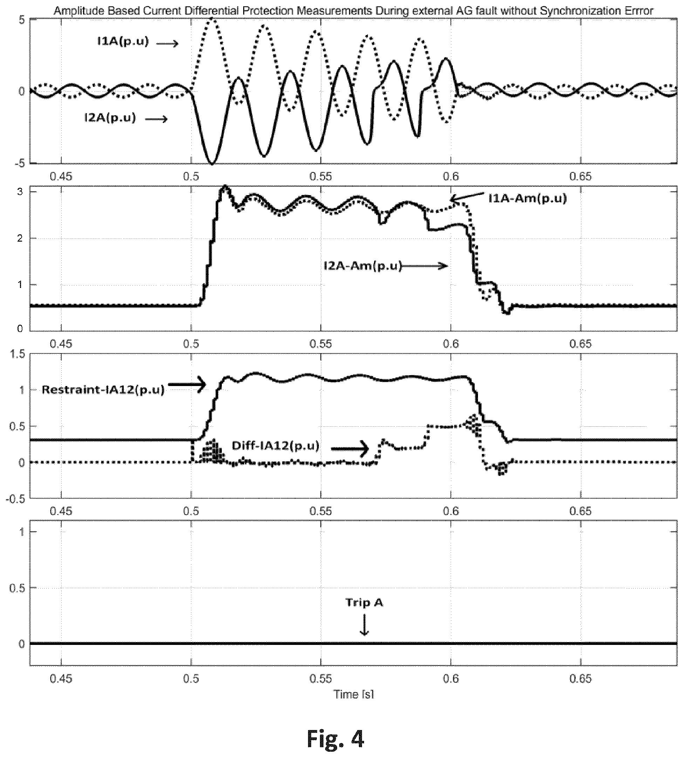

When using the above internal fault conditions, the method of differential protection may be simulated for a scenario of an internal fault (see Fig. 3) and an external fault (see Fig. 4).

Fig. 3 illustrates a scenario of an internal fault. The graphs of Fig. 3 illustrate, from top to bottom: the first current and the second current; the amplitudes of the first current and the second current; the differential current and the restraint current; and a tripping signal. As illustrated, for the internal fault scenario, the first current experiences a large deviation in amplitude within the time interval 0.5 s to 0.6 s. The differential current and the restraint current are determined accordingly, and the differential current is indeed larger than the restraint current. The first current amplitude and the differential current remain satisfy the internal fault conditions for the holding time period *T_{hold_time}.* thus resulting in that the protective relay implementing the method generates a tripping signal *Trip A* which activates a circuit breaker.

Fig. 4 illustrates a scenario of an external fault. The graphs of Fig. 4 illustrate, from top to bottom: the first current and the second current; the amplitudes of the first current and the second current; the differential current and the restraint current; and a tripping signal. As illustrated, for the external fault scenario, the first current and the second current experience large deviations in amplitude within the time interval 0.5 s to 0.6 s. However, the differential current is not larger than the restraint current. Therefore, the protective relay implementing the method does not generate a tripping signal *Trip A,* meaning that the circuit breaker is not activated.

When taking into account CT saturation, additional security index may be advantageous so as to be able to distinguish between internal and external faults. In such a case, the method may comprise: determining S6 a first incremental current *ΔI*_{1*A*} based at least on a first plurality of values of the first current phasor *I*_{1*A*}; determining S7 a second incremental current *ΔI*_{2*A*} based at least on a second plurality of values of the second current phasor *I*₂*_{A},* and determining S8 a first polarity of the first incremental current *ΔI*_{1*A*} and a second polarity of the second incremental current *ΔI*₂*_{A}.* At least one internal fault condition comprises an internal fault condition indicative of whether the first polarity and the second polarity are the same.

According to one non-limiting example, the first incremental current *ΔI*_{1*A*} and/or the second incremental current *ΔI*_{2A} are/is determined as $\left\{\begin{matrix}Δ {I}_{1 A} = {i}_{a 1} \left(t\right) - 2 {i}_{a 1} \left(t-2T\right) + {i}_{a 1} \left(t-T\right) \\ Δ {I}_{2 A} = {i}_{a 2} \left(t\right) - 2 {i}_{a 2} \left(t-2T\right) + {i}_{a 2} \left(t-T\right)\end{matrix}\right.$ wherein *i*_{*a*1}(*t*) is an instantaneous value of the first current phasor at time t, *i*ₐ₂(*t*) is an instantaneous value of the second current phasor at time *t,* and *T* is a fundamental period of the first current phasor *I*_{1*A*} and the second current phasor *I_{2A}.*

For internal faults, the incremental currents *ΔI_{1A}, ΔI_{2A}* have the same polarity so the internal fault condition can additionally comprise the condition $\left\{\begin{matrix}Δ {I}_{1 A} > 0.5 p . u . and Δ {I}_{2 A} > 0.5 p . u . \\ or Δ {I}_{1 A} < - 0.5 p . u . and Δ {I}_{2 A} < - 0.5 p . u .\end{matrix}\right.$

For external faults, the incremental currents *ΔI*₁*_{A}, ΔI*_{2A} have opposite polarities $\left\{\begin{matrix}Δ {I}_{1 A} > 0.5 p . u . and Δ {I}_{2 A} < - 0.5 p . u . \\ or Δ {I}_{1 A} < - 0.5 p . u . and Δ {I}_{2 A} > 0.5 p . u .\end{matrix}\right.$

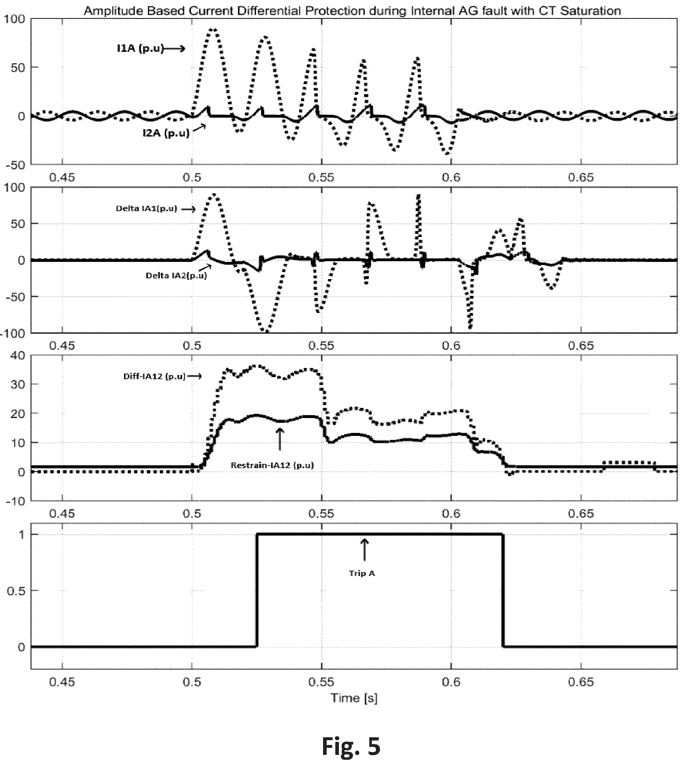

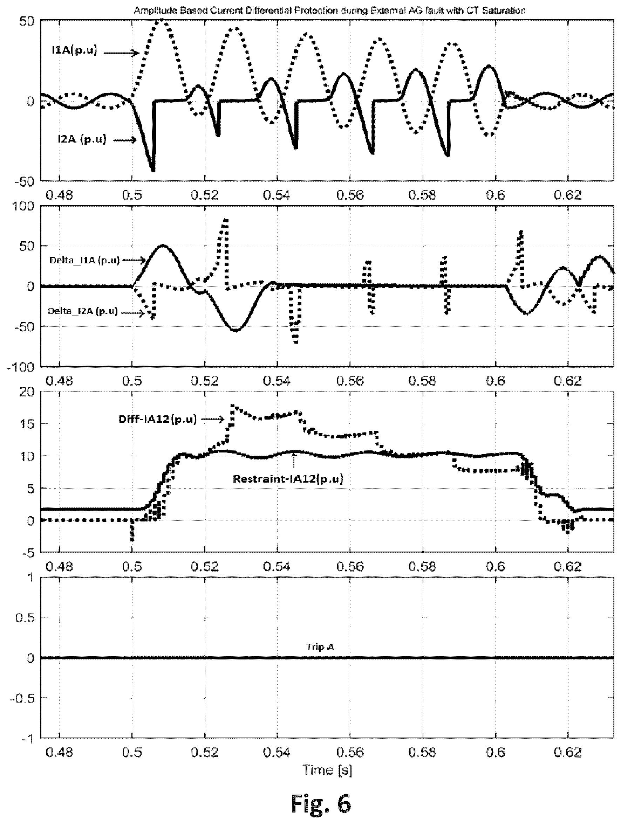

When using the above additional internal fault condition and external fault detection condition, the method of differential protection may be simulated for a scenario of an internal fault (see Fig. 5) and an external fault (see Fig. 6).

Fig. 5 illustrates a scenario of an internal fault. The graphs of Fig. 5 illustrate, from top to bottom: the first current and the second current; the first incremental current and the second incremental current; the differential current and the restraint current; and a tripping signal. As illustrated, for the internal fault scenario, the first current experiences a large deviation in amplitude within the time interval 0.5 s to 0.6 s. The differential current and the restraint current are determined accordingly, and the differential current is indeed larger than the restraint current. Moreover, the incremental currents also satisfy the internal fault condition pertaining to incremental currents. The amplitudes (not shown), the incremental currents and the differential current satisfy the internal fault conditions for the holding time period *T_{hold_time},* thus resulting in that the protective relay implementing the method generates a tripping signal *Trip A* which activates a circuit breaker.

Fig. 6 illustrates a scenario of an external fault. The graphs of Fig. 6 illustrate, from top to bottom: the first current and the second current; the first incremental current and the second incremental current; the differential current and the restraint current; and a tripping signal. As illustrated, for the external fault scenario, the first current and the second current experience large deviations in amplitude within the time interval 0.5 s to 0.6 s. However, although the differential current is larger than the restraint current for a relatively long time duration, the internal fault condition pertaining to the incremental currents are not satisfied for the same time duration while the external fault condition can be confirmed based on the fact of different polarities of two of incremental currents. Therefore, the protective relay implementing the method does not generate a tripping signal *Trip A,* meaning that the circuit breaker is not activated. Thus, even if CT saturation occurred, as evidenced by the elevated differential current, the external fault condition has been found during beginning of external faults with different polarities of the incremental currents as shown in Fig.6. As a result, a blocking signal can be issued to prevent the protective relay from generating a tripping signal for the external fault.

While the foregoing is directed to embodiments of the disclosure, other and further embodiments may be devised without parting from the inventive concept discussed herein. The scope of the invention is however determined by the claims.

## Claims

1. A method of differential protection of a power line (PL) electrically connected between a first substation (10A) and a second substation (10B) of an electrical power network (EPN), the method implemented by at least a first protective relay arranged at the first substation (10A), the method comprising:
receiving (S1) a first current phasor (*I*_{1*A*}) based at least on a first current measurement of a first current in the power line (PL) at the first substation (10A) and a second current phasor (*I_{2A}*) from the second substation (10B) based at least on a second current measurement of a second current in the power line (PL) at the second substation (10B),
determining (S2) a differential current (*Diff_I*_{*A*12}) based at least on a difference between the first current phasor (*I*_{1*A*}) and the second current phasor (*I*_{2*A*});
determining (S3) a restraint current (*Restraint_I*_{*A*12}) based at least on the first current phasor (*I*_{1*A*}) and the second current phasor (*I_{2A}*);
determining (S4) whether at least one internal fault condition is satisfied, the at least one internal fault condition comprising an internal fault condition indicative of whether the differential current (*Diff_I*_{*A*12}) exceeds the restraint current (*Restraint_I*_{*A*12}),
if the at least one internal fault condition is satisfied, generating (S5) a first tripping signal to a first circuit breaker (CB_{A}) to disconnect the power line (PL) from the first substation.

2. The method according to claim 1, wherein the at least one internal fault condition comprises an internal fault condition indicative of whether there is a time discrepancy between a first timing of the first current phasor and a second timing of the second current phasor exceeding a predetermined time period.

3. The method according to any one of claims 1-2, wherein the differential current (*Diff_I*_{*A*12}) is determined as the absolute value of a difference between an absolute value of the first current phasor (*I*_{1*A*}) and an absolute value of the second current phasor (*I*_{2*A*}) $Diff _ {I}_{A 12} = \left|\left|{I}_{1 A}\right|-\left|{I}_{2 A}\right|\right|$

4. The method according to any one of claims 1-3, wherein the restraint current is determined as the maximum of an absolute value of the first current phasor (*I*_{1*A*}) and an absolute value of the second current phasor (*I*_{2*A*}) multiplied by a scaling factor *(Kᵣ)* and optionally adjusted by a constant $Restraint _ {I}_{A 12} = {K}_{r} \times Maximum \left\{\left|{I}_{1 A}\right|, \left|{I}_{2 A}\right|\right\} + C$

5. The method according to any one of claims 1-4, further comprising:
determining a first incremental current (*ΔI*_{1*A*}) based at least on a first plurality of values of the first current phasor *(I_{1A});*
determining a second incremental current (*ΔI_{2A}*) based at least on a second plurality of values of the second current phasor (*I*_{2*A*}),
determining a first polarity of the first incremental current (*ΔI*_{1*A*}) and a second polarity of the second incremental current (*ΔI*_{2*A*});
wherein the at least one internal fault condition comprises an internal fault condition indicative of whether the first polarity and the second polarity are the same.

6. The method according to claim 5, wherein the first incremental current (*ΔI*_{1*A*}) and/or the second incremental current (*ΔI*_{2*A*}) are/is determined as $\left\{\begin{matrix}Δ {I}_{1 A} = {i}_{a 1} \left(t\right) - 2 {i}_{a 1} \left(t-2T\right) + {i}_{a 1} \left(t-T\right) \\ Δ {I}_{2 A} = {i}_{a 2} \left(t\right) - 2 {i}_{a 2} \left(t-2T\right) + {i}_{a 2} \left(t-T\right)\end{matrix}\right.$ wherein *i*_{*a*1}(*t*) is an instantaneous value of the first current phasor at time t, *i*ₐ₂(*t*) is an instantaneous value of the second current phasor at time *t,* and *T* is a fundamental period of the first current phasor (*I*_{1*A*}) and the second current phasor (*I*_{2*A*})*.*

7. The method according to any one of claims 1-6, wherein the at least one internal fault condition comprises an internal fault condition indicative of whether an first current amplitude (*I*_{1*Am*}) of the first current phasor (*I*_{1*A*}) or a second current amplitude (*I_{2Am}*) of the second current phasor (*I_{2A}*) exceeds a predetermined current amplitude threshold.

8. The method according to any one of claims 1-7, wherein the method is implemented by the first protective relay (R_{A}) and a second protective relay (R_{B}), wherein the first tripping signal is generated by the first protective relay (R_{A}) to activate the first circuit breaker (CB_{A}) and a second tripping signal is generated by the second protective relay (R_{B}) to activate a second circuit breaker (CBs) for disconnecting the power line (PL) from the second substation (10B).

9. The method according to claim 8, wherein the first tripping signal and the second tripping signal are only generated when the first protective relay (R_{A}) and the second protective relay (R_{B}) have exchanged information indicating that at least one of the first protective relay (R_{A}) and the second protective relay (R_{B}) has determined that the at least one internal fault condition is satisfied.

10. The method according to any one of the preceding claims, wherein a communication link between the first substation and the second substation is established via a non-dedicated communication network or an optical fiber cable.

11. The method according to any one of the preceding claims, wherein the method is applied for each phase of currents in the power line comprising three phase conductors.

12. A differential protective system of differential protection of a power line (PL) electrically connected between a first substation (10A) of an electrical power network (EPN) and a second substation (10B), the differential protective system configured to be arranged at the first substation (10A) and be communicatively connected to at least a first circuit breaker (CB_{A}) for disconnecting the power line (PL) from the first substation (10A), the protective system comprising:
at least one protective relay configured to perform the method according to any one of claims 1-11.

13. Electrical power network comprising:
a first substation (10_{A}) comprising a first circuit breaker (CB_{A}),
a power line (PL) configured to be electrically connected between the first substation (10A) and a second substation (10B), and
the differential protective system according to claim 12, wherein a first protective relay of the at least one protective relay is arranged at the first substation.

14. The electrical power network according to claim 13, comprising the second substation (10B), wherein a second protective relay of the at least one protective relay is arranged at the second substation (10B).
